# FASCICULE DE BREVET EUROPEEN

(11) **EP 3 368 924 B1**
(45) Date de publication et mention de la délivrance du brevet: **27.01.2021**
(21) Numéro de dépôt: 16785172.4
(22) Date de dépôt: 24.10.2016
(51) Int. Cl.: G01V 1/52, G01V 1/157, G10K 15/06

(54) **DISPOSITIF DE DIAGNOSTIC POUR SONDE SISMIQUE ET PROCÉDÉ ASSOCIÉ**
DIAGNOSEVORRICHTUNG FÜR EINE SEISMISCHE SONDE UND ENTSPRECHENDES VERFAHREN
DIAGNOSTIC DEVICE FOR A SEISMIC PROBE AND ASSOCIATED METHOD

(30) Priorité: 29.10.2015 FR 1560379
(43) Date de publication de la demande: 05.09.2018
(73) Titulaire: ENE29 S.à r.l., 2453 Luxembourg (LU)
(72) Inventeur: DELCHAMBRE, Michaël, 31100 Toulouse (FR); LABUDA, Sergei, 31120 Roquettes (FR); HORSOT, Xavier, 31470 Fonsorbes (FR)
(74) Mandataire: BARRE LAFORGUE
(86) Numéro de dépôt international: PCT/EP2016/075538
(87) Numéro de publication internationale: WO 2017/072069

(56) Documents cités:
- US-A- 2 708 485
- US-A1- 2006 044 940
- US-A1- 2012 285 702

## Description

L'invention concerne un dispositif de diagnostic pour une sonde de génération d'ondes sismiques adaptée pour être descendue dans un puits de forage et procéder à des tirs pour émettre une onde de choc dans le puits. L'invention concerne également un procédé de diagnostic associé.

Dans l'exploration comme dans l'exploitation pétrolière, géologique ou minière, il est usuel d'employer des sondes qui sont descendues dans un puits de forage jusqu'à une profondeur prédéterminée et qui servent à émettre, au sein de la roche, des ondes de choc ou de pression, plus généralement désignées par ondes sismiques, qui se propagent dans la roche, soit pour détecter par réflexion ou réfraction des ruptures de continuité dans la couche rocheuse (en exploration) soit pour déloger une ressource (gaz ou pétrole) et permettre de l'extraire (en exploitation).

Une telle sonde se présente généralement sous la forme d'un corps tubulaire allongé, d'un diamètre de l'ordre de 5 à 30 cm et d'une longueur pouvant atteindre une dizaine de mètres, voire davantage. Une première extrémité du corps de la sonde est reliée à un ou plusieurs câbles de liaison qui assurent d'une part des fonctions de liaison mécanique entre la sonde et un système de treuil en surface pour pouvoir faire descendre et remonter la sonde à l'intérieur du puits de forage, et d'autre part des fonctions d'alimentation électrique de la sonde à partir d'un générateur électrique externe lui aussi placé à la surface, en tête de puits. Le câble de liaison est également adapté pour véhiculer des informations depuis la sonde jusqu'à un poste opérateur en tête de puits et vice-versa.

Dans le présent texte, on utilise les termes "haut" et "bas" ainsi que les qualificatifs apparentés (supérieur, inférieur, etc.) pour désigner une position le long de l'axe de la sonde, prise en position verticale de service. En l'occurrence, le point le plus haut de la sonde est son point d'attache au câble de liaison à la surface.

Le câble de liaison est relié à un module électrique et électronique contenu dans une première partie du corps au voisinage de cette première extrémité. Ce module comprend par exemple des moyens de commande et d'alimentation d'une batterie de condensateurs accumulant l'énergie fournie par le générateur électrique externe sous haute tension. Cette batterie de condensateurs occupe la partie centrale du corps de la sonde et est connectée à un éclateur placé à l'extrémité du corps opposée au câble. Lors d'un tir, la batterie de condensateurs se décharge au travers de l'éclateur, un arc électrique de forte puissance est généré et vaporise un fluide, en général de l'eau, baignant les électrodes de l'éclateur. Cette vaporisation instantanée, de nature quasi explosive génère des ondes "sismiques" de choc et/ou de pression qui se diffusent autour de l'éclateur, le cas échéant au travers d'une membrane souple entourant l'éclateur et se communiquent au liquide remplissant le puits de forage, et dans la roche avoisinante. L'éclateur peut également être réalisé sous la forme d'un fil conducteur reliant les deux électrodes. Lors d'un tir, la batterie de condensateurs se décharge au travers du fil qui se vaporise instantanément et génère ainsi les ondes sismiques.

Cependant, ces ondes de choc sont en général émises à grande profondeur et leur effet, notamment en mode exploitation, n'est pas immédiatement perceptible. Il est donc nécessaire de vérifier que la sonde est en état de fonctionnement et que les ondes de choc sont bien émises.

On connait, par exemple du document WO2010/146016, une sonde comportant divers capteurs exposés au milieu extérieur et renseignant un opérateur à la surface sur les conditions de fonctionnement de la sonde. En particulier, un capteur de pression à haute fréquence permet de surveiller la signature de l'onde de choc en mesurant la variation de pression en fonction du temps lors d'un tir. Cependant, l'exposition du capteur au milieu extérieur à la sonde réduit sa durée de vie et la probabilité d'un faux diagnostic de panne de la sonde lié à une panne de capteur est importante. En outre, il est nécessaire d'avoir un opérateur à la surface pour surveiller les informations fournies et prendre les mesures nécessaires.

Le document US 2 708 485 décrit une sonde sismique pour la mesure des caractéristiques d'une formation rocheuse dans laquelle la sonde est introduite par l'intermédiaire d'un puits. La sonde comporte deux générateurs d'ondes de choc et deux capteurs fonctionnant alternativement pour mesurer les délais de propagation des ondes sismiques au travers du fluide remplissant le puits de forage et la formation rocheuse qui l'entoure.

Le document US 2012/0285702 décrit un dispositif d'actionnement d'un outil en fond de puits.

US 2006/044940 concerne un système d'acquisition des données sismiques qui n'est pas adapté pour faire des diagnostics des sondes sismiques.

L'invention vise donc un dispositif de diagnostic d'une sonde sismique qui soit simple et fiable et ne présente pas les inconvénients de la technique antérieure.

L'invention vise encore un tel dispositif qui soit économique et facile à maintenir.

L'invention vise également un procédé de diagnostic d'une telle sonde sismique qui peut opérer de façon autonome et fournir des renseignements précis sur le fonctionnement de la sonde.

Selon un aspect particulier, l'invention vise un dispositif de diagnostic qui puisse effectuer une mise en sécurité de la sonde en cas d'anomalie.

Pour ce faire, l'invention concerne un dispositif selon la revendication 1.

Les inventeurs ont remarqué qu'il n'était pas nécessaire de placer le capteur à l'extérieur de la sonde sismique. En effet, l'onde de choc générée entre les électrodes de l'éclateur se propage selon une forme sensiblement sphérique et génère divers types de contraintes dans les parois du corps. En particulier, l'onde de choc générée entre les électrodes induit une contrainte sur l'électrode supérieure de l'éclateur qui se transmet aux parties métalliques auxquelles elle est reliée et se propage au corps tubulaire de la sonde.

En plaçant le capteur directement au contact de la face interne de la paroi du corps de la sonde, il est possible, en raison de temps de propagation différents, de ne mesurer que l'onde de choc transmise directement par la paroi du corps de la sonde et non pas l'onde de choc réfléchie ou réfractée par les parois du puits et les formations rocheuses environnantes. En effet, les variations de diamètre du puits et des formations rocheuses environnantes introduisent des retards et des modifications dans l'onde de choc. Ces retards et modifications qui sont utiles pour investiguer et mesurer les caractéristiques des formations rocheuses entourant le forage sont préjudiciables à un diagnostic de fonctionnement de la sonde elle-même. Il est par exemple difficile, voire impossible de distinguer une atténuation du signal mesuré par le capteur due au milieu extérieur (augmentation du diamètre du puits, formations rocheuses plus perméables, etc.) d'une atténuation due à une baisse de la quantité d'énergie fournie à l'éclateur ou à une détérioration des électrodes. Dès lors, en mesurant le signal de l'onde de choc directement transmise par le corps de la sonde, il est possible de s'affranchir des variations induites par le milieu environnant et d'obtenir un signal débarrassé des biais pouvant entrainer un diagnostic erroné.

D'autres modes de transmission des contraintes sont possibles en fonction de la structure de la sonde. Par exemple, lorsque l'éclateur est équipé d'une membrane souple permettant d'isoler le fluide à l'intérieur de l'éclateur du fluide à l'extérieur de la sonde, l'onde de choc générée lors d'un tir provoque une déformation de cette membrane dans une direction radiale. Du fait de son encastrement dans le corps tubulaire de la sonde, la membrane communique au corps tubulaire une contrainte radiale qui se propage le long du corps, de part et d'autre de l'éclateur, et en particulier vers le haut de la sonde. Dès lors, un capteur placé à l'intérieur du corps tubulaire, en contact et/ou fixé sur une paroi interne dudit corps est à même de mesurer cette contrainte.

À l'intérieur du corps de la sonde, le capteur est protégé des contraintes d'environnement qui règnent à l'extérieur de la sonde comme fonctionnement en milieu liquide ou boueux, à forte température, éventuellement en milieu acide, etc. En outre, un capteur placé à l'extérieur de la sonde pourrait être arraché ou endommagé lors de chocs ou de frottements contre la paroi du puits.

Compte tenu de la durée très brève d'une onde de choc (de quelques microsecondes à quelques centaines de microsecondes), on utilise préférentiellement un capteur capable de mesurer un signal de contrainte à haute fréquence. La position du capteur selon l'axe longitudinal est choisie de manière à ce que la fraction d'énergie de l'onde de choc transmise par le corps tubulaire de la sonde soit sensiblement atténuée afin de ne pas détruire le capteur. De préférence, le capteur est placé au-dessus de l'éclateur, et pour conserver une proximité nécessaire entre la batterie de condensateurs et l'éclateur, au-dessus de celle-ci. Cependant, lorsque la sonde est formée de plusieurs tronçons, le capteur est placé de préférence dans le même tronçon que l'éclateur afin que le signal de contrainte ne soit pas trop atténué par les dispositifs de couplage entre tronçons. En pratique, une distance variant de deux à quatre mètres entre l'éclateur et la position du capteur s'est avérée optimale.

Avantageusement et selon l'invention, le capteur est choisi dans le groupe formé des accéléromètres, des jauges de contraintes et des capteurs de pression dynamique. En fonction du type de capteur et du type de signal de contrainte à mesurer, le capteur est fixé radialement directement sur la paroi interne du corps de la sonde ou peut être installé selon un axe parallèle à celui de la sonde, sur une paroi transversale, orthogonale à l'axe de la sonde, au voisinage immédiat de la paroi du corps de la sonde.

Avantageusement et selon l'invention, le capteur présente au moins une direction de mesure orthogonale à la paroi du corps de la sonde. Les inventeurs ont en effet constaté que lors d'un tir, il se produit un premier pic de contrainte axiale correspondant à un effort de traction / compression sur le corps suivi d'une série d'ondes de contraintes radiales, correspondant à un mode de flexion du corps tubulaire généré par une oscillation des parois du tube. Ces ondes de contraintes radiales présentent des caractéristiques de fréquence et d'amplitude plus riches en information et plus faciles à mesurer que le pic de contrainte axiale.

Avantageusement et selon l'invention, le dispositif comporte un calculateur adapté pour recevoir un signal délivré par le capteur lors d'un tir de la sonde. Ce calculateur peut être analogique, par exemple comprenant un ou plusieurs redresseurs et des moyens d'intégration analogique pour obtenir une tension image de l'énergie du signal ou bien préférentiellement numérique.

Avantageusement et selon l'invention, ledit calculateur comprend des moyens d'échantillonnage et de conversion analogique - numérique, des moyens de mémoire et des moyens de calcul adaptés pour effectuer au moins un traitement numérique dudit signal délivré par le capteur. Le capteur est ainsi connecté à un calculateur comportant des moyens de calcul, des mémoires, et des moyens de numérisation du signal du capteur permettant d'enregistrer celui-ci ou au moins certaines de ses caractéristiques telles que fréquence et/ou amplitude, de leur appliquer des traitements numériques tels qu'une intégration du signal redressé, etc. pour en tirer une valeur de référence et comparer le signal instantané à cette valeur de référence. D'autres traitements peuvent être également envisagés, tels que par exemple l'utilisation à titre de valeur de référence du signal obtenu lors de l'onde de choc précédente.

Avantageusement et selon une variante de l'invention, le dispositif de diagnostic comporte en outre un organe de décharge lente de la batterie de condensateurs adapté pour être mis en service lorsqu'une défaillance est détectée lors d'un tir de la sonde. En cas d'anomalie ou d'échec d'un tir, la batterie de condensateurs peut rester chargée, le cas échéant dans un état instable, et ramener la sonde chargée à la surface peut s'avérer dangereux. Le dispositif de diagnostic comprend donc en outre un organe permettant de décharger la batterie de condensateurs, soit sur une commande envoyée depuis la surface, soit de manière autonome lorsque l'anomalie est détectée localement. L'organe de décharge peut être simplement une résistance de valeur appropriée commutée en parallèle sur les bornes de la batterie de condensateurs par un interrupteur commandé par le calculateur électronique de traitement du signal du capteur.

L'invention s'étend également à un procédé de diagnostic d'une sonde sismique, ladite sonde comportant, dans un corps tubulaire allongé, un module électronique, une batterie de condensateurs et un éclateur adapté pour procéder à des tirs en générant une onde de choc dans un puits de forage, ledit procédé étant caractérisé en ce que :
- on utilise une sonde équipée d'un capteur adapté pour mesurer au moins un paramètre de l'onde de choc en fonction du temps, ledit capteur étant fixé sur une face interne d'une paroi du corps à une distance prédéterminée non nulle de l'éclateur,
- un signal délivré par ledit capteur est enregistré par un calculateur pendant un tir,
- le signal enregistré est traité et comparé à au moins une valeur de référence, et
- en fonction du résultat de la comparaison, le calculateur délivre une information représentative de l'état de fonctionnement de la sonde.

En utilisant une sonde équipée d'un capteur adapté pour enregistrer par exemple l'accélération subie par le corps de la sonde en fonction du temps ou encore une variation de la pression dans le fluide environnant la sonde, il est possible de détecter la présence ou l'absence d'une onde de choc après le déclenchement d'un tir en observant le signal recueilli par le capteur. Si le tir a échoué, pour diverses raisons, par exemple usure des électrodes de l'éclateur, insuffisance de la charge de la batterie de condensateurs, etc. le signal enregistré par le capteur en fonction du temps présente des caractéristiques très différentes d'un signal recueilli lors d'un tir réussi.

Avantageusement et selon l'invention, le signal enregistré est transmis en temps réel à un poste opérateur en tête du puits. Dans un premier mode de fonctionnement du procédé, le signal est transmis à la surface où un opérateur analyse la forme de ce signal et commande, le cas échéant, une adaptation des paramètres de charge de la batterie de condensateurs ou des paramètres de l'éclateur, par exemple distance inter électrodes, etc.

Alternativement ou en combinaison, selon l'invention, le signal est enregistré dans une mémoire faisant partie du calculateur embarqué dans la sonde. Les données relatives à chaque tir sont ainsi enregistrées dans une mémoire faisant office de "boite noire". L'exploitation de ces données peut être ainsi réalisée en différé, après la remontée de la sonde ou lors des phases de maintenance de celle-ci.

Avantageusement et selon l'invention, une pluralité des signaux délivrés par le capteur et enregistrés est utilisée pour calculer ladite au moins une valeur de référence. Un traitement local desdits signaux est effectué par le calculateur embarqué dans la sonde pour en extraire de multiples données relatives aux différents tirs et permet de fournir une valeur de référence à laquelle sera comparé le signal recueilli lors du prochain tir.

Avantageusement et selon l'invention, au moins l'une des valeurs de référence est déterminée à partir d'une moyenne énergétique des signaux enregistrés. En calculant l'énergie fournie à chaque tir, par exemple en intégrant par rapport au temps la valeur d'accélération fournie par le signal portée au carré, on obtient une moyenne énergétique des signaux pour une pluralité de tirs à laquelle on compare l'énergie du dernier signal et on conclut à une anomalie si l'énergie du dernier signal est très inférieure à la moyenne énergétique calculée.

Alternativement ou en combinaison, selon l'invention, au moins l'une des valeurs de référence est obtenue en fonction d'une analyse spectrale des signaux enregistrés. Le traitement effectué par le calculateur peut également consister en une analyse spectrale du signal dans laquelle des valeurs de fréquence et d'amplitude du signal sont extraites du signal et enregistrées pour être ensuite comparées à une moyenne de ces valeurs obtenue à partir d'une pluralité de tirs.

Avantageusement et selon l'invention, le procédé comporte une étape supplémentaire d'adaptation automatique des paramètres de commande de la sonde lorsque le calculateur délivre une information représentative d'une anomalie de fonctionnement de celle-ci. En fonction de la programmation du calculateur, celui-ci peut agir sur certains paramètres de fonctionnement de la sonde en vue de modifier le spectre de l'onde de choc générée. Par exemple, le calculateur peut modifier le niveau de charge de la batterie de condensateurs ou régler certains paramètres de l'éclateur tels que la distance inter électrodes. Ces ajustements peuvent être en outre corrigés et/ou complétés par d'autres mesures en provenance de divers autres capteurs tels que des capteurs de température ou de pression.

Avantageusement et selon l'invention, au moins une étape supplémentaire est une étape de mise en sécurité de la sonde, ladite étape comprenant un arrêt d'alimentation de la batterie de condensateurs et une commutation d'un organe de décharge lente entre les électrodes de la batterie de condensateurs. Lorsqu'une anomalie est détectée, soit par l'observation directe du signal transmis en surface, soit par comparaison locale avec une valeur de référence, cela peut signifier qu'aucune onde de choc n'a été émise et que la batterie de condensateurs est susceptible d'être encore chargée. Une telle anomalie peut par exemple se produire lorsque les électrodes de l'éclateur présentent un écartement anormal, par exemple dû à une usure prématurée. Dans ce cas, pour assurer la sécurité des personnes lorsque la sonde est remontée ou pour éviter tout court-circuit susceptible d'endommager le matériel, on commande la mise en série d'une résistance de charge entre les bornes de la batterie de condensateurs afin de la décharger.

L'invention concerne également un dispositif et un procédé de diagnostic d'une sonde sismique caractérisés en combinaison par tout ou partie des caractéristiques mentionnées ci-dessus ou ci-après.

D'autres buts, caractéristiques et avantages de l'invention apparaîtront au vu de la description qui va suivre et des dessins annexés dans lesquels :
- la figure 1 représente une vue schématique d'une sonde sismique équipée d'un dispositif selon l'invention,
- la figure 2 est un schéma illustrant le fonctionnement du dispositif,
- la figure 3 représente une forme d'onde captée par le dispositif selon l'invention, et
- la figure 4 est un schéma électrique illustrant la fonction de mise en sécurité du dispositif selon l'invention.

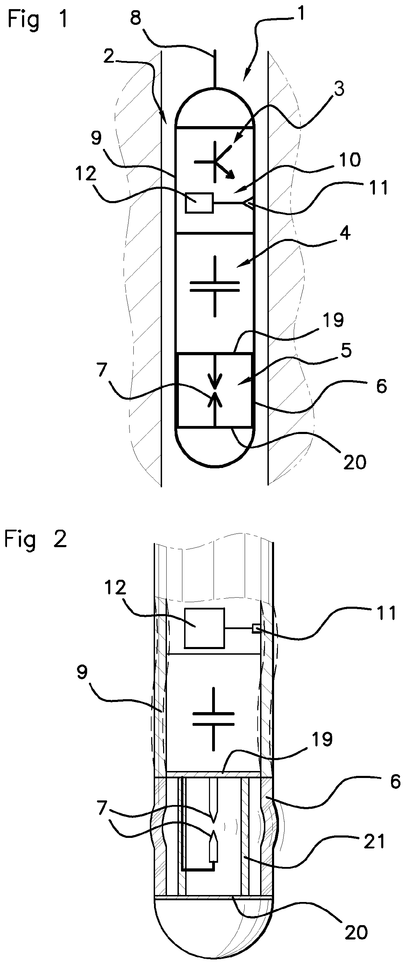

La figure 1 représente schématiquement une sonde 1 sismique placée dans un puits 2 de forage. À sa partie supérieure, la sonde 1 est reliée à la surface par un câble 8 de liaison assurant une liaison mécanique permettant de descendre et remonter la sonde dans le puits et une liaison électrique et électronique avec la surface pour alimenter la sonde en énergie et transmettre des informations depuis ou vers la surface. La sonde 1 comporte un corps 9 tubulaire à l'intérieur duquel sont logés, de haut en bas, un module électrique 3 comprenant des moyens de régulation de la charge d'une batterie de condensateurs, une batterie de condensateurs 4 et un éclateur 5.

Le module électrique 3 comporte également un dispositif 10 de diagnostic du bon fonctionnement de la sonde 1 pendant les tirs. Ce dispositif 10 de diagnostic comprend au moins un capteur 11, par exemple un capteur 11 accélérométrique capable de mesurer des accélérations à hautes fréquences et un calculateur 12 électronique comportant des moyens de mémoire et de calcul, par exemple un microcontrôleur doté d'une mémoire RAM et/ou EEPROM pour enregistrer des valeurs et d'une mémoire ROM pour les instructions de programme ainsi que des moyens de conversion analogique / numérique capables de transformer des valeurs analogiques fournies par le capteur 11 en valeurs numériques susceptibles d'être stockées dans les moyens de mémoire.

Le capteur 11 est préférentiellement placé au contact de la paroi intérieure du corps 9 tubulaire, à une distance de l'ordre de deux à quatre mètres au-dessus de l'éclateur. Lorsque le corps 9 est formé de plusieurs tronçons emboités, le capteur 11 est préférentiellement placé sur le même tronçon que l'éclateur 5 afin d'éviter que les raccords entre tronçons ne détériorent la transmission des accélérations le long du corps 9.

L'éclateur 5 de la sonde 1 comprend au moins deux électrodes 7 placées en vis-à-vis dans une enceinte dite chambre 17 de décharge. Cette chambre 17 contient un fluide, par exemple une solution aqueuse.

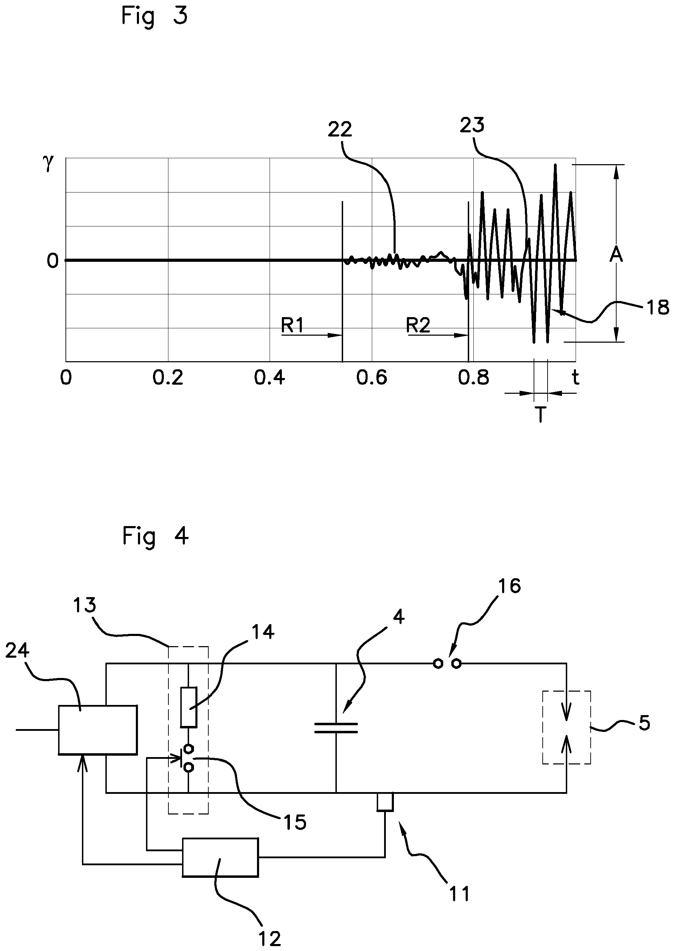

La chambre 17 est délimitée respectivement en haut et en bas par des cloisons supérieure 19 et inférieure 20 transversales au corps 9 et sur sa périphérie par une membrane 6 périphérique de forme tubulaire. Des entretoises 21 maintiennent l'écartement des cloisons 19 et 20. La membrane 6 est réalisée en élastomère, préférablement en fluoroélastomère. La membrane 6 peut également être métallique ou encore en matériau synthétique thermoplastique. Dans le cas d'un éclateur à fil, la membrane peut être remplacée par une grille métallique visant à éviter l'intrusion de particules qui pourraient perturber la décharge électrique. Les extrémités de la membrane 6 sont en relation d'encastrement avec les parois du corps 9 tubulaire au-dessus et au-dessous de l'éclateur 5. La chambre 17 est ainsi isolée de manière étanche du milieu extérieur (boues, hydrocarbures, etc.) remplissant le puits 2 de manière à éviter que ce milieu extérieur puisse perturber une décharge électrique déclenchée entre les électrodes 7. Les électrodes 7 sont électriquement reliées aux bornes de la batterie de condensateurs 4 par l'intermédiaire d'un commutateur 16 (figure 4).

Lors d'un tir, le commutateur 16 se ferme et met la batterie de condensateurs 4 en série avec les électrodes 7 de l'éclateur 5. La décharge qui se produit alors entre les électrodes vaporise localement le fluide, générant ainsi une onde de choc qui se propage selon une sphère de rayon croissant centrée sur l'entrefer des deux électrodes 7. Les parois de la chambre de décharge de l'éclateur 5 subissent alors principalement deux types de contraintes qui sont retransmises au corps 9. Le premier type de contrainte est une onde de compression pour laquelle la déformation exercée sur le corps 9 se déplace axialement, dans la même direction que la propagation de l'onde. Le deuxième type de contrainte est une onde de flexion / cisaillement dans laquelle la déformation exercée sur le corps 9 est orthogonale à la direction de propagation.

On se réfère à la figure 3 pour détailler les contraintes générées par un tir en relation avec un signal 18 fourni par le capteur 11 du dispositif de diagnostic 10. La première contrainte est une contrainte axiale de compression exercée par les électrodes 7 sur les cloisons 19 et 20 et retransmise par celles-ci sur la paroi du corps 9. Cette contrainte se déplace à une vitesse de l'ordre de 5000 m/s dans l'acier du corps. Le capteur 11 traduit cette contrainte par une première partie 22 du signal 18 qui présente un retard R1 de l'ordre de 0,5 ms (pour une distance de l'ordre de 2,50 m à 3m entre l'éclateur et le capteur) par rapport au tir.

Immédiatement après la contrainte axiale, le capteur 11 mesure une contrainte radiale en flexion qu'il traduit par une deuxième partie 23 du signal 18. Cette contrainte en flexion se traduit par une oscillation radiale comme montré, de manière exagérée pour la compréhension sur la figure 2. Cette oscillation radiale se propage le long du corps 9 en direction du capteur 11 à une vitesse moindre que celle de la contrainte axiale, de l'ordre de 3000 m/s dans l'acier du corps et est détectée avec un retard R2 de l'ordre de 0,8 ms.

Cependant la deuxième partie 23 du signal représentatif de cette contrainte radiale présente l'avantage d'avoir une amplitude A d'accélération de six à dix fois supérieure à celle de la contrainte axiale (de l'ordre de 3.10⁵ m/s²) et une fréquence inférieure de moitié (35 kHz au lieu de 75 kHz) donc une période T double de la première partie 22 du signal, ce qui la rend plus facile à exploiter avec des capteurs 11 accélérométriques moins couteux.

Bien entendu ces valeurs sont données à titre d'exemple dans des conditions particulières et sont susceptibles de varier en fonction de l'énergie du tir, des caractéristiques des matériaux de la membrane et du corps, des conditions du milieu dans lequel est placée la sonde lors du tir, etc. Cependant, pour une sonde donnée, les signaux relevés par le capteur sont suffisamment comparables pour permettre, après traitement, de distinguer un échec de tir d'un tir réussi.

Le signal 18 issu du capteur 11 est transmis au calculateur 12 pour traitement. Dans une version préférentielle de l'invention, le calculateur 12 comprend des moyens d'échantillonnage et de conversion analogique - numérique du signal 18 et des moyens de mémoire pour enregistrer l'image numérique de ce signal.

Différents traitements du signal sont possibles. Lorsqu'un opérateur est présent à la surface, en tête de puits, et a à sa disposition le matériel adéquat, il est possible de transmettre en temps réel le signal 18 vers la surface via le câble 8 de liaison. Dans ce cas, une simple analyse visuelle du signal permet de déterminer si le tir a bien eu lieu de manière satisfaisante ou non et de prendre les mesures nécessaires.

Il peut être cependant préférable d'enregistrer une pluralité de signaux 18 obtenus lors d'autant de tirs et de procéder à des traitements statistiques en vue de définir un signal type représentatif d'un tir réussi et d'y comparer les données issues de tirs suivants. Cependant, dans un but de simplification des opérations réalisées par le calculateur 12, il est préférable de définir à partir de chaque signal une valeur représentative de celui-ci, par exemple une mesure de l'énergie du signal, obtenue par exemple en faisant la somme des valeurs absolues des échantillons du signal 18. En faisant la moyenne des valeurs d'énergie des signaux enregistrés, on calcule une valeur de référence et en comparant la valeur de l'énergie de chaque signal à celle de la valeur de référence, il est possible de distinguer un tir réussi d'un échec. Un traitement statistique classique consiste à réaliser une moyenne glissante des valeurs relevées avec élimination des valeurs correspondant à un échec et de comparer chaque valeur à la moyenne plus ou moins un, deux ou trois écarts-types en fonction de la sélectivité désirée pour le test.

Un autre traitement des signaux 18 fournis par le capteur 11 au cours d'une pluralité de tirs peut être réalisé à partir d'une analyse de l'onde 23 de la seconde partie du signal 18. Dans ce cas, la valeur représentative de l'efficacité du tir peut être la fréquence (ou la période) de l'onde 23 et on tire une valeur de référence à laquelle comparer chaque tir d'une moyenne de ces valeurs de fréquence de manière analogue au test précédent. D'autres valeurs de référence peuvent être également extraites d'autres caractéristiques de l'onde 23, par exemple de son analyse spectrale.

Il est ainsi possible de déterminer localement par le calculateur 12 embarqué dans la sonde 1 si le tir qui a été déclenché s'est déroulé de manière satisfaisante ou non et de prendre certaines actions correctives sans qu'il soit nécessaire qu'un opérateur agisse à partir de la surface.

Par exemple, il est possible de réaliser une étape supplémentaire d'adaptation automatique des paramètres de commande lorsque le calculateur 12 délivre une information représentative d'une anomalie de fonctionnement de la sonde. Lorsqu'une anomalie est détectée, le calculateur 12 peut ajuster automatiquement (sans intervention de l'opérateur) certains paramètres de commande pour modifier le spectre de l'onde de choc. Les paramètres de commande ainsi ajustable comprennent par exemple le niveau de charge de la batterie de condensateurs ou des paramètres de l'éclateur, par exemple la distance inter-électrodes. D'autres données mesurées par des capteurs d'autre nature comme la pression ou la, température, peuvent être pris en compte pour ajuster ces paramètres de commande.

On se réfère maintenant à la figure 4 du dessin annexé pour décrire un autre exemple d'une telle action corrective. Par exemple, si un tir déclenché n'a pas eu lieu pour des causes diverses telles que usure ou rupture d'une électrode 7, défaillance du commutateur 16, etc. il est possible que la batterie 4 de condensateurs soit restée chargée. Cette charge électrique d'une quantité considérable (plusieurs kilo ampères sous des tensions allant de quelques kilovolts à plusieurs dizaines de kilovolts) peut représenter un danger considérable pour la sonde elle-même et pour les opérateurs susceptibles d'intervenir sur la sonde pour maintenance.

Le dispositif de diagnostic 10 comprend donc en outre des moyens de mise en sécurité sous la forme d'un organe 13 de décharge lente de la batterie 4 de condensateurs. Un tel organe peut être simplement constitué d'une résistance 14 adaptée pour dissiper l'énergie accumulée dans la batterie de condensateurs et d'un interrupteur 15 commandé par le calculateur 12, montés en série entre les bornes d'alimentation de la batterie de condensateurs.

En cas de diagnostic d'une anomalie de tir, le calculateur 12 commande l'arrêt de l'alimentation 24 contenue dans le module électrique 3 servant à contrôler la charge de la batterie de condensateurs. Simultanément ou immédiatement après, le calculateur 12 commande la fermeture de l'interrupteur 15 qui connecte la résistance 14 en série entre les bornes de la batterie de condensateurs. La charge de la batterie de condensateurs est alors dissipée dans la résistance 14 et ne présente plus de risque pour les opérateurs de maintenance.

Bien entendu, cette description est donnée à titre d'exemple illustratif uniquement et l'homme du métier pourra y apporter de nombreuses modifications sans sortir de la portée de l'invention, comme par exemple définir d'autres types de tests utilisant d'autres valeurs de référence, par exemple l'amplitude A du pic d'accélération mesuré par le capteur 11. De même d'autres actions correctives peuvent être définies et déclenchées par le calculateur 12 en cas d'anomalie, par exemple commuter d'autres condensateurs au sein de la batterie de condensateurs, etc.

## Revendications

1. Dispositif comprenant :
- une sonde comportant, dans un corps (9) tubulaire allongé, un module (3) électronique, une batterie (4) de condensateurs et un éclateur (5) adapté pour procéder à des tirs en générant une onde de choc dans un puits (2) de forage,
- un dispositif de diagnostic de ladite sonde comportant au moins un capteur (11) adapté pour mesurer au moins un paramètre de l'onde de choc en fonction du temps, **caractérisé en ce que** :
- ledit capteur est fixé sur une face interne d'une paroi du corps tubulaire, à une distance prédéterminée non nulle de l'éclateur en direction du module électronique et adapté pour mesurer l'onde de choc directement transmise par la paroi du corps tubulaire,
- il comporte un calculateur (12) adapté pour :
- enregistrer pendant un tir un signal (18) délivré par ledit capteur,
- traiter le signal (18) enregistré et le comparer à au moins une valeur de référence, et
- en fonction du résultat de la comparaison, délivrer une information représentative de l'état de fonctionnement de la sonde.

2. Dispositif selon la revendication 1 **caractérisé en ce que** le capteur (11) est choisi dans le groupe formé des accéléromètres, des jauges de contraintes et des capteurs de pression dynamique.

3. Dispositif selon l'une des revendications 1 ou 2, **caractérisé en ce que** le capteur (11) présente au moins une direction de mesure orthogonale à la paroi du corps de la sonde.

4. Dispositif selon l'une des revendications 1 à 3, **caractérisé en ce que** ledit calculateur (12) comprend des moyens d'échantillonnage et de conversion analogique - numérique, des moyens de mémoire et des moyens de calcul adaptés pour effectuer au moins un traitement numérique dudit signal (18) délivré par le capteur (11).

5. Dispositif selon l'une quelconque des revendications 1 à 4, **caractérisé en ce qu'**il comporte en outre un organe (14, 15) de décharge lente de la batterie (4) de condensateurs adapté pour pouvoir être mis en service lorsqu'une défaillance est détectée lors d'un tir de la sonde.

6. Procédé de diagnostic d'une sonde (1) sismique, ladite sonde comportant, dans un corps (9) tubulaire allongé, un module (3) électronique, une batterie (4) de condensateurs et un éclateur (5) adapté pour procéder à des tirs en générant une onde de choc dans un puits (2) de forage, ledit procédé étant **caractérisé en ce que** :
- on utilise une sonde (1) équipée d'un capteur (11) adapté pour mesurer au moins un paramètre de l'onde de choc directement transmise par le corps (9) de la sonde en fonction du temps, ledit capteur étant fixé sur une face interne d'une paroi du corps (9) à une distance prédéterminée non nulle de l'éclateur,
- un signal (18) délivré par ledit capteur est enregistré par un calculateur (12) pendant un tir,
- le signal (18) enregistré est traité et comparé à au moins une valeur de référence, et
- en fonction du résultat de la comparaison, le calculateur (12) délivre une information représentative de l'état de fonctionnement de la sonde.

7. Procédé selon la revendication 6, **caractérisé en ce que** le signal (18) enregistré est transmis en temps réel à un poste opérateur en tête du puits.

8. Procédé selon l'une quelconque des revendications 6 ou 7, **caractérisé en ce que** le signal (18) est enregistré dans une mémoire faisant partie du calculateur (12) embarqué dans la sonde.

9. Procédé selon l'une quelconque des revendications 6 à 8, **caractérisé en ce qu'**une pluralité des signaux délivrés par le capteur et enregistrés est utilisée pour calculer ladite au moins une valeur de référence.

10. Procédé selon la revendication 9, **caractérisé en ce qu'**au moins l'une des valeurs de référence est déterminée à partir d'une moyenne énergétique des signaux (18) enregistrés.

11. Procédé selon l'une quelconque des revendications 9 ou 10, **caractérisé en ce qu'**au moins l'une des valeurs de référence est obtenue en fonction d'une analyse spectrale des signaux (18) enregistrés.

12. Procédé selon l'une quelconque des revendications 6 à 11, **caractérisé en ce que** ledit procédé comporte au moins une étape supplémentaire d'adaptation automatique des paramètres de commande de la sonde lorsque le calculateur (12) délivre une information représentative d'une anomalie de fonctionnement de celle-ci.

13. Procédé selon la revendication 12, **caractérisé en ce qu'**au moins une étape supplémentaire est une étape de mise en sécurité de la sonde (1), ladite étape comprenant un arrêt d'alimentation de la batterie (4) de condensateurs et une commutation d'un organe (14, 15) de décharge lente entre les électrodes de la batterie de condensateurs.

## Patentansprüche

1. Vorrichtung, umfassend:
- eine Sonde, die in einem länglichen, röhrenförmigen Körper (9) ein Elektronikmodul (3), eine Kondensatorbatterie (4) und eine Funkenstrecke (5) beinhaltet, die angepasst ist, um Schüsse vorzunehmen, indem sie eine Schockwelle in einem Bohrloch (2) erzeugt,
- eine Diagnosevorrichtung der Sonde, die mindestens einen Sensor (11) beinhaltet, der angepasst ist, um mindestens einen Parameter der Schockwelle in Abhängigkeit von der Zeit zu messen,
**dadurch gekennzeichnet, dass**:
- der Sensor auf einer Innenseite einer Wand des röhrenförmigen Körpers in einem vorbestimmten Abstand ungleich null von der Funkenstrecke in Richtung des Elektronikmoduls befestigt ist, und angepasst ist, um die Schockwelle, die direkt von der Wand des röhrenförmigen Körpers übertragen wird, zu messen,
- sie einen Rechner (12) beinhaltet, der angepasst ist zum:
- Speichern, während eines Schusses, eines Signals (18), das durch den Sensor abgegeben wird,
- Verarbeiten des gespeicherten Signals (18) und Vergleichen mit mindestens einem Bezugswert, und
- in Abhängigkeit von dem Ergebnis des Vergleichs, Abgeben einer Information, die repräsentativ für den Funktionszustand der Sonde ist.

2. Vorrichtung nach Anspruch 1, **dadurch gekennzeichnet, dass** der Sensor (11) aus der Gruppe ausgewählt ist, die aus Beschleunigungsmessern, Dehnmessstreifen, und dynamischen Drucksensoren gebildet ist.

3. Vorrichtung nach einem der Ansprüche 1 oder 2, **dadurch gekennzeichnet, dass** der Sensor (11) mindestens eine zur Wand des Körpers der Sonde orthogonale Messrichtung aufweist.

4. Vorrichtung nach einem der Ansprüche 1 bis 3, **dadurch gekennzeichnet, dass** der Rechner (12) Mittel zur Stichprobenahme und Analog-Digital-Umwandlung, Speichermittel und Berechnungsmittel umfasst, die angepasst sind, um mindestens eine Computerverarbeitung des von dem Sensor (11) abgegebenen Signals (18) auszuführen.

5. Vorrichtung nach einem der Ansprüche 1 bis 4, **dadurch gekennzeichnet, dass** sie weiter ein Organ (14, 15) zur langsamen Entladung der Kondensatorbatterie (4) beinhaltet, das angepasst ist, um in Betrieb genommen werden zu können, wenn bei einem Schuss der Sonde ein Ausfall detektiert wird.

6. Diagnoseverfahren für eine seismische Sonde (1), wobei die Sonde in einem länglichen, röhrenförmigen Körper (9) ein Elektronikmodul (3), eine Kondensatorbatterie (4) und eine Funkenstrecke (5) beinhaltet, die angepasst ist, um Schüsse vorzunehmen, indem sie eine Schockwelle in einem Bohrloch (2) erzeugt, wobei das Verfahren **dadurch gekennzeichnet ist, dass**:
- eine Sonde (1) verwendet wird, die mit einem Sensor (11) ausgestattet ist, der angepasst ist, um mindestens einen Parameter der Schockwelle, die direkt von dem Körper (9) der Sonde übertragen wird, in Abhängigkeit von der Zeit zu messen, wobei der Sensor auf einer Innenseite einer Wand des Körpers (9) in einem vorbestimmten Abstand ungleich null von der Funkenstrecke befestigt ist,
- ein von dem Sensor abgegebenes Signal (18) während des Schusses von einem Rechner (12) gespeichert wird,
- das gespeicherte Signal (18) verarbeitet und mit mindestens einem Bezugswert verglichen wird,
- der Rechner (12) in Abhängigkeit von dem Ergebnis des Vergleichs eine Information abgibt, die repräsentativ für den Funktionszustand der Sonde ist.

7. Verfahren nach Anspruch 6, **dadurch gekennzeichnet, dass** das gespeicherte Signal (18) in Echtzeit zu einem Arbeitsplatz am Kopf des Loches übertragen wird.

8. Verfahren nach einem der Ansprüche 6 oder 7, **dadurch gekennzeichnet, dass** das Signal (18) in einem Speicher gespeichert wird, der Bestandteil des in der Sonde eingebauten Rechners (12) ist.

9. Verfahren nach einem der Ansprüche 6 bis 8, **dadurch gekennzeichnet, dass** eine Vielzahl der von dem Sensor abgegebenen und gespeicherten Signale zum Berechnen des mindestens einen Bezugswerts verwendet wird.

10. Verfahren nach Anspruch 9, **dadurch gekennzeichnet, dass** mindestens einer der Bezugswerte aus einem energetischen Mittelwert der gespeicherten Signale (18) bestimmt wird.

11. Verfahren nach einem der Ansprüche 9 oder 10, **dadurch gekennzeichnet, dass** mindestens einer der Bezugswerte in Abhängigkeit von einer Spektralanalyse der gespeicherten Signale (18) erhalten wird.

12. Verfahren nach einem der Ansprüche 6 bis 11, **dadurch gekennzeichnet, dass** das Verfahren mindestens einen zusätzlichen Schritt des automatischen Anpassens der Steuerungsparameter der Sonde beinhaltet, wenn der Rechner (12) eine für eine Betriebsanomalie derselben repräsentative Information ausgibt.

13. Verfahren nach Anspruch 12, **dadurch gekennzeichnet, dass** mindestens ein zusätzlicher Schritt ein Schritt zur Sicherung der Sonde (1) ist, wobei der Schritt einen Versorgungsstopp der Kondensatorbatterien (4) und ein Umschalten von einem Organ (14, 15) zur langsamen Entladung zwischen den Elektroden der Kondensatorbatterie umfasst.

## Claims

1. Device comprising:
- a probe comprising, in an elongate tubular body (9), an electronic module (3), a capacitor bank (4) and a spark gap (5) adapted to fire shots generating a shock wave in a wellbore (2),
- a diagnostic device of said probe comprising at least one sensor (11) adapted to measure at least one parameter of the shock wave over time, **characterised in that**:
- said sensor is fixed to an inner surface of a wall of the tubular body, at a predetermined, non-zero distance from the spark gap in the direction of the electronic module and adapted to measure the shock wave directly transmitted by the wall of the tubular body,
- it comprises a computer (12) adapted to:
- record, during firing, a signal (18) output by said sensor,
- process the recorded signal (18) and compare it with at least one reference value, and
- based on the result of the comparison, output information representing the operating state of the probe.

2. Device according to claim 1, **characterised in that** the sensor (11) is selected from the group formed of accelerometers, strain gauges and dynamic pressure sensors.

3. Device according to any one of claims 1 or 2, **characterised in that** the sensor (11) has at least one measuring direction orthogonal to the wall of the body of the probe.

4. Device according to any one of claims 1 to 3, **characterised in that** said computer (12) comprises sampling and analogue-digital conversion means, memory means and calculation means adapted to perform at least one operation of digitally processing said signal (18) output by the sensor (11).

5. Device according to any one of claims 1 to 4, **characterised in that** it further comprises a member (14, 15) for slow discharge of the capacitor bank (4) adapted to be able to be used when a failure is detected during firing of the probe.

6. Diagnostic method for a seismic probe (1), said probe comprising, in an elongate tubular body (9), an electronic module (3), a capacitor bank (4) and a spark gap (5) adapted to effect firing, generating a shock wave in a wellbore (2), said method being **characterised in that**:
- a probe (1) is used which is equipped with a sensor (11) adapted to measure at least one parameter of the shock wave directly transmitted by the body (9) of the probe over time, said sensor being fixed to an inner surface of a wall of the body (9) at a predetermined, non-zero distance from the spark gap,
- a signal (18) output by said sensor is recorded by a computer (12) during firing,
- the recorded signal (18) is processed and compared with at least one reference value, and
- based on the result of the comparison, the computer (12) outputs information representing the operating state of the probe.

7. Method according to claim 6, **characterised in that** the recorded signal (18) is sent in real time to an operator station at the wellhead.

8. Method according to any one of claims 6 or 7, **characterised in that** the signal (18) is recorded in a memory forming part of the on-board computer (12) in the probe.

9. Method according to any one of claims 6 to 8, **characterised in that** a plurality of signals output by the sensor and recorded are used to calculate said at least one reference value.

10. Method according to claim 9, **characterised in that** at least one of the reference values is determined from an energetic average of the recorded signals (18).

11. Method according to any one of claims 9 or 10, **characterised in that** at least one of the reference values is obtained from a spectral analysis of the recorded signals (18).

12. Method according to any one of claims 6 to 11, **characterised in that** said method comprises at least one additional step of automatically adapting control parameters of the probe when the computer (12) outputs information representing an anomaly in the operation of the probe.

13. Method according to claim 12, **characterised in that** at least one additional step is a step of rendering the probe (1) safe, said step comprising stopping the power supply to the capacitor bank (4) and switching a slow discharge member (14, 15) between the electrodes of the capacitor bank.
